# EUROPEAN PATENT APPLICATION

(11) **EP 4 737 989 A1**
(43) Date of publication of application: **06.05.2026**
(21) Application number: 25210967.3
(22) Date of filing: 24.10.2025
(51) Int. Cl.: G02B 30/56

(54) **DISPLAY DEVICE**

(30) Priority: 31.10.2024 JP 2024191532
(71) Applicant: Alps Alpine Co., Ltd., Ota-ku, Tokyo 145-8501 (JP)
(72) Inventor: Ashimine, Katsunari, Fukushima (JP)
(74) Representative: Schmitt-Nilson Schraud Waibel Wohlfrom Patentanwälte Partnerschaft mbB

(57) **Abstract**

A display device capable of displaying an aerial image by using retroreflection is provided. The display device includes: a light source; a retroreflective member; a first polarizing beam splitter configured to reflect light from the light source toward the retroreflective member; a retardation plate disposed between the first polarizing beam splitter and the retroreflective member and configured to provide a constant phase difference between incident light and outgoing light; a decorative sheet configured to transmit the light of the aerial image transmitted through the first polarizing beam splitter; and a second polarizing beam splitter disposed on a bottom side of the decorative sheet that is a side opposite to a decorative surface of the decorative sheet and configured to have a transmission axis aligned in a same direction as a direction in which the light of the aerial image is transmitted.

## Description

The present application is based on and claims priority to Japanese Patent Application No. 2024-191532 filed on October 31, 2024, the entire contents of which are hereby incorporated by reference.

The present disclosure relates to a display device for displaying an aerial image by using retroreflection.

Aerial imaging by retroreflection (AIRR) is known. For example, in an aerial imaging device disclosed in Japanese Laid-Open Patent Application No. 2020-76811, a decorative sheet is disposed between an imaging element 20 and an imaging position P such that the imaging element 20 is not observed from the outside. The decorative sheet may, for example, have holes made in it or be printed with transparent ink.

The present disclosure relates to a display device according to the appended claims. Embodiments are disclosed in the dependent claims.

A display device according to the present disclosure is capable of displaying an aerial image by using retroreflection, and includes a light source, a retroreflective member, a first polarizing beam splitter configured to reflect light from the light source toward the retroreflective member, a retardation plate disposed between the first polarizing beam splitter and the retroreflective member and configured to provide a constant phase difference between incident light and outgoing light, a decorative sheet configured to transmit the light of the aerial image transmitted through the first polarizing beam splitter, and a second polarizing beam splitter disposed on a bottom side of the decorative sheet that is a side opposite to a decorative surface of the decorative sheet and configured to have a transmission axis aligned in the same direction as the direction in which the light of the aerial image is transmitted.
FIG. 1 is a top view illustrating a schematic configuration of an existing display device for displaying an aerial image;
FIG. 2 is a top view illustrating a schematic configuration of a display device according to an embodiment of the present disclosure; and
FIG. 3 is a diagram illustrating a difference between the existing display device and the display device according to the embodiment of the present disclosure.

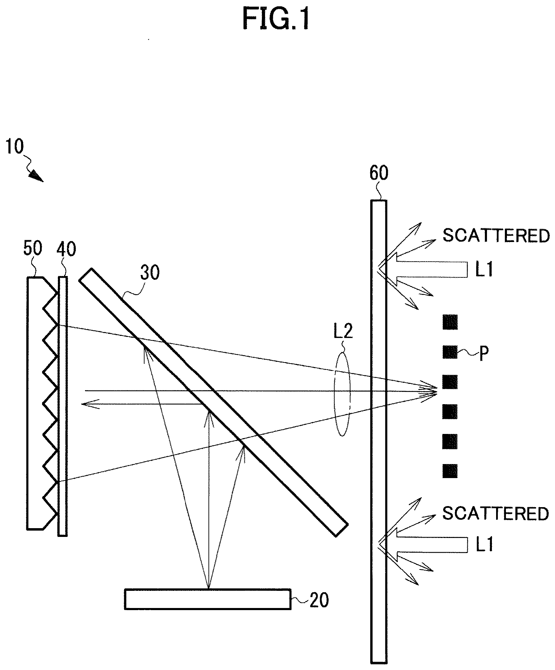

FIG. 1 is a top view illustrating a schematic configuration of an existing display device for displaying an aerial image. A display device 10 is configured to include a display 20, a polarizing beam splitter 30, a λ/4 wave plate 40, a retroreflective member 50, and a decorative sheet 60 in a housing such as a casing, for example.

The display 20 generates an original image of an aerial image P, and the light of the original image is emitted toward the polarizing beam splitter 30. The light output from the display 20 may be polarized light. The polarizing beam splitter 30 reflects a part of incident light toward the λ/4 wave plate 40, the light transmitted through the λ/4 wave plate 40 is reflected by the retroreflective member 50 in the same direction as the incident light, and this reflected light again transmits through the λ/4 wave plate 40 and is incident on the polarizing beam splitter 30. A transmission axis of the polarizing beam splitter 30 is aligned with a direction in which the light of the aerial image is transmitted, and the light transmitted through the polarizing beam splitter 30 forms an image of the aerial image P through the decorative sheet 60. An imaging position of the aerial image P is symmetrical to the position of the display 20 with respect to the main surface of the polarizing beam splitter 30.

When the color of a decorative surface of the decorative sheet 60 is made bright in order to enhance the appearance design, it is necessary to make a layer of the ink printed on the decorative sheet 60 thick, or to increase the amount of white ink used in a light diffusion layer. That is, in order to make the decorative surface appear bright, it is necessary to increase a light diffusion component of the ink and scatter light L1 entering from the outside to a large extent by a portion printed by the ink on the decorative surface and by the light diffusion component of the ink.

In contrast to this, in order to form an image of the aerial image P, it is necessary to allow light L2 of the aerial image from the polarizing beam splitter 30 to pass through the decorative sheet 60 and to converge the light externally. However, when the light diffusion component of the ink of the decorative sheet 60 is increased to increase the scattering of the light L1 entered from the outside, the scattering with respect to the light L2 of the aerial image from the inside also increases, and thus the decorative sheet 60 undesirably scatters the light L2 of the aerial image. As a result, the resolution (blur) and the luminance (brightness) of the aerial image P are reduced.

The present disclosure provides a display device capable of preventing the degradation of the resolution and the luminance of the aerial image while brightening the decorative surface.

Next, an embodiment of the present disclosure will be described. In one aspect of the present disclosure, the display device is provided with a polarizing beam splitter whose transmission axis is aligned with the direction in which the light of an aerial image is transmitted, in a lower portion on a bottom side of a decorative sheet opposite to the main surface of the decorative sheet, and the light entering from the outside is reflected by a polarizing film of the polarizing beam splitter after the light is transmitted through the decorative sheet. This makes it possible to make the decorative sheet appear bright even with a thin ink layer, and at the same time, since the light beam of the aerial image is aligned with the transmission axis of the polarizing beam splitter, it is possible to suppress a decrease in luminance of the aerial image and suppress blur due to scattering of the light beam. It should be noted that the drawings referred to in the following description of the embodiments contain exaggerated representations to facilitate understanding of the disclosure and do not represent the shape or scale of the actual product.

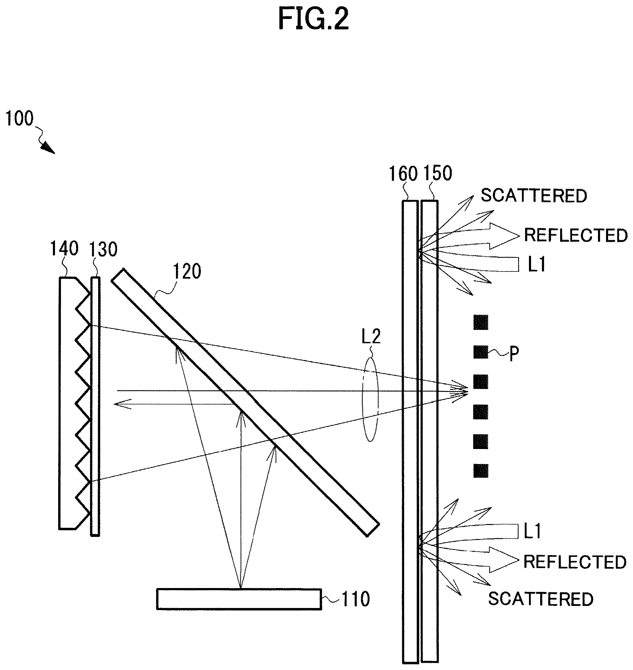

Next, an embodiment of the present disclosure will be described in detail. FIG. 2 is a top view illustrating a schematic configuration of a display device according to an embodiment of the present disclosure. A display device 100 of the present embodiment includes a display 110, a first polarizing beam splitter 120, a λ/4 wave plate 130, a retroreflective member 140, a decorative sheet 150, and a second polarizing beam splitter 160. These components are arranged in a casing, for example, and the aerial image P is displayed, appearing to rise into the air from one side surface of the casing.

The display 110 is a light source for generating an original image of the aerial image P. The display 110 is, for example, an LED or an organic EL display, a projector, or an LED unit in which a plurality of LEDs are two-dimensionally arranged. The display 110 is arranged such that the light of the original image of the aerial image P can enter the first polarizing beam splitter 120. The light emitted from the display 110 is generally polarized light.

The first polarizing beam splitter 120 is arranged so as to be inclined with respect to the display 110, and reflects part of the light incident from the display 110 toward the retroreflective member 140. The polarizing beam splitter is an optical element that separates light based on its polarization state, and specifically separates incident light into two different components of linearly polarized light, namely, a P-polarized component and an S-polarized component, and reflects mainly the light of the S-polarized component and transmits mainly the light of the P-polarized component. For example, when the P-polarized component transmits through the polarizing beam splitter, the transmission axis of the polarizing beam splitter is the direction in which the light of the P-polarized component travels. The polarizing beam splitter is achieved by coating a polarizing film for polarization separation on a surface of a substrate such as flat glass or plastic, for example. The polarizing film reflects certain components and transmits other components. The polarizing film functions as a reflective surface of the polarizing beam splitter.

A λ/4 wave plate 130 is disposed on a surface side of the retroreflective member 140. The λ/4 wave plate 130 is, for example, a retardation film adhered to the surface of the retroreflective member 140. The λ/4 wave plate 130 causes a phase difference of A/4 between the incident light and the emitted light. For example, when linearly polarized light oscillating in a certain direction is incident on the λ/4 wave plate, light converted into circularly polarized light is emitted, or when circularly polarized light is incident, light converted into linearly polarized light is emitted.

The retroreflective member 140 is an optical element that reflects light in the same direction as the incident light, and although its structure is not particularly limited, it includes, for example, a triangular pyramidal retroreflective element, a full-cube corner retroreflective element, or the like. The light retroreflected by the retroreflective member 140 passes through the λ/4 wave plate 130 again, and then is incident on the first polarizing beam splitter 120.

The transmission axis of the first polarizing beam splitter 120 is aligned to transmit the light emitted from the λ/4 wave plate 130. That is, of the light incident from the λ/4 wave plate 130, a polarization component along the transmission axis is transmitted through the first polarizing beam splitter 120, and the transmitted light L2 is incident on the second polarizing beam splitter 160.

The second polarizing beam splitter 160 is arranged substantially parallel to the retroreflective member 140. The transmission axis of the second polarizing beam splitter 160 is aligned such that the light L2 transmitted through the first polarizing beam splitter 120 is transmitted. It should be noted that the second polarizing beam splitter 160 is arranged such that its polarizing film, i.e., its reflective surface, faces the back surface of the decorative sheet 150.

The decorative sheet 150 is arranged on the second polarizing beam splitter 160. The decorative sheet 150 may be laminated so as to be in close contact with the second polarizing beam splitter 160, or may be arranged in close proximity to the second polarizing beam splitter 160. The decorative sheet 150 includes plastic, vinyl, a film, or the like, and is a translucent optical element for enhancing the appearance designability of products and components by adding colors, patterns, and textures. The decorative sheet 150 is attached to the surface of a casing, for example, and plays a role of making optical components and the like in the casing difficult to be seen from the outside.

In the decorative sheet 150, when the color of the decorative surface is made bright in order to enhance the appearance design, it is necessary to increase the thickness of the ink layer or to use a large amount of white ink for the light diffusion layer. However, extensive use of such ink causes scattering of the aerial image light transmitted through the decorative sheet 150 due to the light diffusion component of the ink, resulting in reduced resolution and luminance of the aerial image.

In the present embodiment, by using less ink or a thinner ink layer for the decorative sheet 150 than that used in the existing technique, the scattering of the light of the aerial image transmitted through the decorative sheet 150 is suppressed, and degradation in the resolution and luminance of the aerial image is prevented. In contrast to this, the light entering from the outside is reflected by the second polarizing beam splitter 160 after passing through the decorative sheet 150, such that the decorative sheet 150 appears bright.

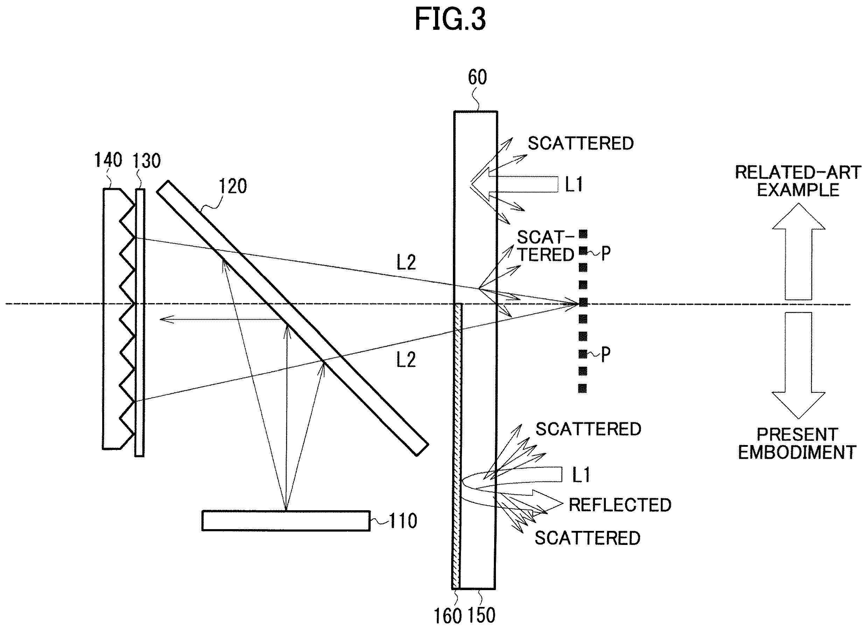

Next, the operation of the display device of the present embodiment will be described with reference to FIG. 3. The upper side of FIG. 3 illustrates the direction of light rays in the display device of a related-art example, and the lower side of FIG. 3 schematically illustrates the direction of light rays in the display device of the present embodiment. The light emitted from the display 110 is incident on the first polarizing beam splitter 120, where the light of the polarization component having a reflection axis orthogonal to the transmission axis is reflected toward the A/4 wave plate 130 and the retroreflective member 140. The light transmitted through the A/4 wave plate 130 is retroreflected by the retroreflective member 140 and passes through the λ/4 wave plate 130 again. The light emitted from the A/4 wave plate 130 undergoes a phase difference of n/2 with respect to the incident light. For example, when the light incident on the λ/4 wave plate 130 is linearly polarized light in a certain direction, the light emitted from the A/4 wave plate 130 is linearly polarized light orthogonal to the light incident on the λ/4 wave plate 130.

The light emitted from the A/4 wave plate 130 is incident on the first polarizing beam splitter 120, where the light of the polarization component having the transmission axis is transmitted. This transmitted light is the light L2 of the aerial image. In the existing display device, the light L2 of the aerial image is transmitted through the decorative sheet 60 as it is to form the aerial image P. In contrast to this, in the display device of the preset embodiment, the light L2 of the aerial image is transmitted through the decorative sheet 150 via the second polarizing beam splitter 160 to form the aerial image P. The transmission axis of the second polarizing beam splitter 160 is in the direction in which the light L2 of the aerial image is transmitted, that is, in the same direction as the transmission axis of the first polarizing beam splitter 120.

In the existing display device, since the decorative sheet 60 has a thick ink layer thereon or uses a large amount of ink, much of the light L1 entering from the outside is scattered by the decorative sheet 60, and thus the decorative surface appears bright. In contrast to this, the light L2 of the aerial image generated internally is scattered when it is transmitted through the decorative sheet 60, and the resolution and luminance of the aerial image P are degraded.

In contrast to the above, in the decorative sheet 150 of the present embodiment, the ink layer is made thinner or less ink is used than that used in the decorative sheet 60 of the existing technique, such that the degree of scattering with respect to the light L2 of the aerial image generated internally when the light L2 transmits through the decorative sheet 150 is reduced, and degradation of the resolution and luminance of the aerial image P is suppressed. Additionally, the degree of scattering with respect to the light L1 entered from the outside by the decorative sheet 150 is reduced, but since the reflective surface of the second polarizing beam splitter 160 is disposed on a back surface side of the decorative sheet 150, most of the light L1 transmitted through the decorative sheet 150 is reflected by the reflective surface of the second polarizing beam splitter 160. Therefore, it is possible to make the decorative surface of the decorative sheet 150 appear bright without thickening the ink layer or by using a large amount of ink as in the existing technique.

In the above embodiment, the λ/4 wave plate is disposed on the retroreflective member, but other retardation plates or retardation films may be used to provide a function equivalent to the A/4 wave plate. Also, any ink color and design can be used for the decorative sheet. Furthermore, the display device of the present disclosure for displaying an aerial image may be applied to an aerial input device for inputting through an aerial image. In this case, an electrostatic sensor or the like is used for detecting the approach or separation of an operator's finger or the like to or from the aerial image.

According to the present disclosure, since the second polarizing beam splitter is disposed on the bottom side of the decorative sheet that is the side opposite to the decorative surface of the decorative sheet and configured to have its transmission axis aligned in the same direction as the direction in which the light of the aerial image is transmitted, the light transmitted through the decorative sheet entering from the outside is reflected by the second polarizing beam splitter, and the light of the aerial image transmitted through the first polarizing beam splitter transmits through the second polarizing beam splitter. In this way, the resolution and luminance of the aerial image transmitted through the decorative sheet can be secured while the decorative sheet appears bright from the outside. In other words, as compared with the existing decorative sheet, the layer of the ink printed on the decorative sheet can be made thin, or the portion where the ink is used can be reduced, and thus the resolution and luminance of the aerial image can be prevented from being degraded by the decorative sheet.

Although preferred embodiments of the present invention have been described in detail above, the present invention is not limited to specific embodiments, and various modifications and changes are possible within the scope of the claims.

## Claims

1. A display device capable of displaying an aerial image by using retroreflection, the display device comprising:
a light source;
a retroreflective member;
a first polarizing beam splitter configured to reflect light from the light source toward the retroreflective member;
a retardation plate disposed between the first polarizing beam splitter and the retroreflective member and configured to provide a constant phase difference between incident light and outgoing light;
a decorative sheet configured to transmit the light of the aerial image transmitted through the first polarizing beam splitter; and
a second polarizing beam splitter disposed on a bottom side of the decorative sheet that is a side opposite to a decorative surface of the decorative sheet and configured to have a transmission axis aligned in a same direction as a direction in which the light of the aerial image is transmitted.

2. The display device according to claim 1, wherein
the second polarizing beam splitter includes a transparent substrate and a polarizing film formed on the transparent substrate, and
the polarizing film faces a bottom surface of the decorative sheet.

3. The display device according to claim 1 or 2, wherein
the decorative sheet is laminated on the second polarizing beam splitter.

4. The display device according to one of claim 1 to 3, wherein
the decorative sheet includes ink or paint that includes a light diffusion component.

5. The display device according to one of claim 1 to 4, wherein
the retardation plate is a A/4 wave plate.
